# EUROPÄISCHE PATENTSCHRIFT

(11) **EP 4 045 709 B1**
(45) Veröffentlichungstag und Bekanntmachung des Hinweises auf die Patenterteilung: **15.07.2026**
(21) Anmeldenummer: 20788998.1
(22) Anmeldetag: 24.09.2020
(51) Int. Cl.: D21G 9/00, B65H 18/08, B65H 18/20, D21F 7/04, B65H 18/02, B65H 26/02

(54) **VERFAHREN ZUR HERSTELLUNG VON FASERSTOFFBAHN-FERTIGROLLEN**
METHOD OF PRODUCING PARTIAL ROLLS OF FIBROUS MATERIAL WEB
PROCÉDÉ DE FABRICATION DE ROULEAUX PARTIELS DE BANDE DE MATIÈRE FIBREUSE

(30) Priorität: 15.10.2019 DE 102019127670
(43) Veröffentlichungstag der Anmeldung: 24.08.2022
(73) Patentinhaber: Voith Patent GmbH, 89522 Heidenheim (DE)
(72) Erfinder: WETSCHENBACHER, Ewald, 73485 Zöbingen (DE); WÖLFEL, Christian, 89522 Heidenheim (DE); JÜRGENS, Daniel, 89522 Heidenheim (DE)
(86) Internationale Anmeldenummer: PCT/EP2020/076649
(87) Internationale Veröffentlichungsnummer: WO 2021/073846

(56) Entgegenhaltungen:
- WO-A1-2004/044665
- DE-A1- 102010 041 707
- DE-A1- 102016 204 599
- JP-A- H0 680 289

## Beschreibung

Die Erfindung betrifft ein Verfahren zur Herstellung einer Mutterrolle einer, aus einer Faserstoffsuspension hergestellten Faserstoffbahn und von Fertigrollen aus durch Längsschneiden einer, von der Mutterrolle laufenden Faserstoffbahn erzeugten Teilbahnen.

Verfahren und Anlagen zur Herstellung einer Faserstoffbahn, insbesondere zur Herstellung einer Papier-, Tissue- oder Kartonbahn, sind bekannt und umfassen üblicherweise eine Stoffaufbereitung, in welcher aus einem Fasern enthaltenden Rohstoff, wie Altpapier und/oder Zellstoff, eine Faserstoffsuspension hergestellt wird, und eine Papiermaschine, in welcher die aus der Stoffaufbereitung stammende Faserstoffsuspension zu Papier oder einer anderen Faserstoffbahn verarbeitet wird.

Zur Herstellung der Faserstoffsuspension aus dem Fasern enthaltenden Rohstoff wird der Rohstoff in einem, auch Pulper genannten Stofflöser mit Wasser vermischt und aufgelöst, bevor die so hergestellte Faserstoffsuspension während der anschließenden Prozessschritte sukzessive bis zu dem Endprodukt unter Wasserentzug konzentriert wird.

Bei Anlagen zur Papierherstellung handelt es sich um technisch aufwändige Großanlagen, die neben der eigentlichen Papiermaschine mit Nassteil, Trockenteil, Kalander, Roller und zugehörigen Peripherieeinheiten vorgeschaltete Einheiten der Stoffaufbereitung wie zum Beispiel Flotation, Sortierung, Dispergierung, Bleiche, Mahlung sowie nachgeschaltete Systeme wie Rollenwickeleinheiten sowie Rollenschneidmaschinen, die Rollenverpackung und den Rollentransport umfassen. Daher haben derartige Maschinen eine Vielzahl von separaten Regelkreisen innerhalb der Stoffaufbereitung, innerhalb der Papiermaschine sowie bei den nachfolgenden Einheiten, beispielsweise aus DE10 2016 204599A1 und DE10 2010 041707A1 bekannt.

Darüber hinaus erfolgt die Steuerung oft basierend auf den Erfahrungen des Bedienpersonals. Dementsprechend lange dauert dann auch die Anpassung der Ist-Paramater an die Soll-Parameter.

Papierbahnen werden in relativ großen Breiten von bis zu 10 m und mehr in einer Papiermaschine produziert. Die Produktion erfolgt quasi endlos. Dabei definiert die Bahnlaufrichtung der Papiermaschine für alle in der Papierfabrik befindlichen Maschinen und Einrichtungen die Längs- und in horizontaler Ebene senkrecht dazu die Querrichtung.

Am Ende der Papiermaschine wird die erzeugte Papierbahn in voller Breite auf einen Wickelkern aufgewickelt. Dieser Wickelkern wird zyklisch, in aller Regel bei laufender Produktion, ersetzt. Der auf diese Weise entstehende, bahnbreite Wickel wird üblicherweise als Mutterrolle bezeichnet.

Um für einen späteren Verwender, beispielsweise eine Druckerei, handhabbar zu sein, muss die, auf einer Mutterrolle gewickelte, Papierbahn in mehrere, parallel verlaufende Teilbahnen geschnitten werden, deren Breiten für den jeweiligen späteren Verwender geeignet ist.

Diese Breiten können fallweise stark variieren, so dass die Aufteilung der Papierbahn üblicherweise nach einem individuell definierbaren Schnittmuster vorgenommen wird. Die Teilbahnen werden dann zu sogenannten Teilbahn- oder Fertigrollen aufgewickelt und gemeinsam als sogenannter Rollenwurf ausgegeben. Das Schnittmuster ist von Rollenwurf zu Rollenwurf änderbar und mit entsprechendem Ausschuss durch Randbeschnitt und Restschwarte verbunden.

Das Längsschneiden und Aufwickeln erfolgt zweckmäßigerweise in einer einzigen Maschine, die weitverbreitet als Rollenschneidmaschine bezeichnet wird. Im Wesentlichen besteht eine solche Rollenschneidmaschine aus einer Abrolleinrichtung, einer Schneidpartie und einer Aufrolleinrichtung, wobei die Schneidpartie eine entsprechend der möglichen Teilungen angepassten Anzahl von meist scheibenförmig ausgebildeten Schneiden aufweist. Bei der Ausgestaltung einer Rollenschneidmaschine unterscheidet der Fachmann zwischen zwei grundsätzlichen Bautypen, nämlich dem Tragwalzenroller und dem Stützwalzenroller.

Beim Aufwickeln der Teilbahnen zu Fertigrollen kann es zu erheblichen Schwankungen beim Wickelverhalten kommen, was sich auf Vibrationen der Maschineneinheit, die Anzahl an Abrissen und letztendlich die Qualität der Fertigrollen auswirkt.

Die Aufgabe der Erfindung ist es daher die Herstellung sowie die Qualität der Fertigrollen zu verbessern.

Erfindungsgemäß wurde die Aufgabe durch die Merkmale des Anspruchs 1 bzw. des Anspruchs 2 gelöst.

Vorteilhafte Ausgestaltungen sind in den Unteransprüchen beschrieben.

Nachfolgend soll die Erfindung an einem Ausführungsbeispiel näher erläutert werden. In der beigefügten Zeichnung zeigt:
Figur 1: ein Anlagenschema zur Herstellung von Faserstoffbahn-Fertigrollen 3 und
Figur 2: eine schematische Seitenansicht einer Wickelvorrichtung 6 dieser Anlage.

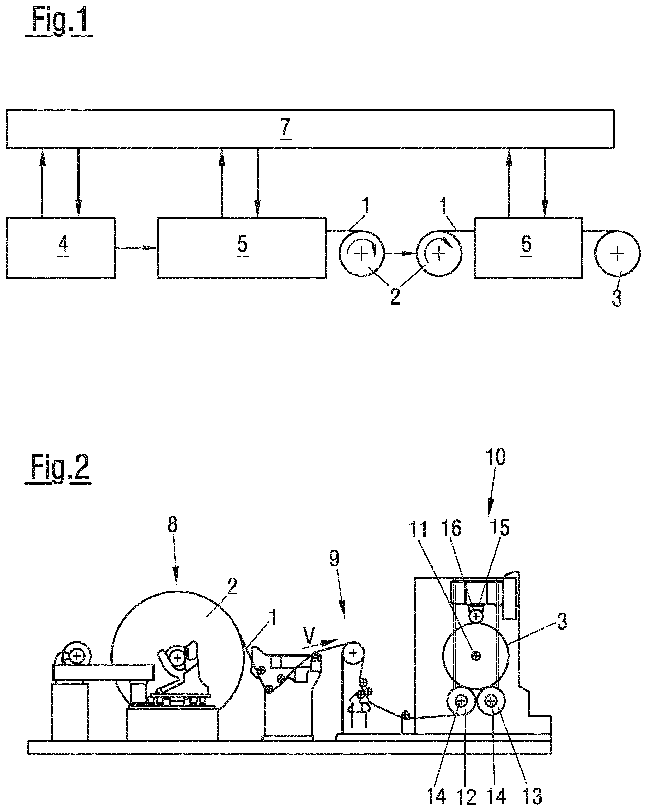

Die gesamte Anlage zur Herstellung einer Papierbahn besteht gemäß Figur 1 im Wesentlichen aus einer Stoffaufbereitung 4, einer Papiermaschine 5 sowie eine Wickelvorrichtung 6. Es versteht sich, dass die Stoffaufbereitung 4 und die Papiermaschine 5 jeweils eine Vielzahl von Verfahrensschritten umfassen. So beginnt die Papiermaschine 5 in der Regel mit einem Stoffauflauf mit Nasspartie zur Blattbildung, woran sich eine Pressenpartie zur Entwässerung und eine Trockenpartie zur Trocknung der Faserstoffbahn 1 anschließt. Je nach Art der herzustellenden Faserstoffbahn 1 können dann noch Streich- und/oder Gättvorrichtungen folgen. Das fertig bearbeitete und geglättete Papier wird anschließend zu einer Mutterrolle 2 aufgewickelt.

Bei der Aufbereitung der Altpapiere in der Stoffaufbereitung 4 finden in der Regel eine Anzahl verschiedener Verfahrensschritte statt, z.B. muss angelieferter Papierstoff in Wasser suspendiert, sortiert, flotiert, gemahlen, dispergiert und gereinigt werden. Diese Prozesse sind aber allgemein bekannt. Zumeist werden noch diverse Additive wie Chemikalien und Hilfsstoffe hinzugegeben. Am Ende der Stoffaufbereitung 4 wird die Faserstoffsuspension in einem oder mehreren Stapeltürmen gesammelt.

Zur Steuerung der Prozesse ist der Stoffaufbereitung 4, der Papiermaschine 5 sowie der Wickelvorrichtung 6 eine gemeinsame Steuer- und Regeleinheit 7 zugeordnet, die Parameter der Faserstoffsuspension in der Stoffaufbereitung 4, der Faserstoffbahn 1 in der Papiermaschine 5 sowie der Wickelvorrichtung 6 auswertet und den Prozess entsprechend steuert oder regelt.

Um die Beschaffenheit der Faserstoffbahn 1 bereits bei der Herstellung derselben beeinflussen zu können, werden bestimmte Parameter der Faserstoffbahn 1, wie der Aschegehalt, der Weißgrad, die Anzahl/Fläche der Schmutzpunkte, die Bahndicke, der Feuchtegehalt, das Trockengewicht, die Festigkeit, den Stärkeauftrag oder den Farbauftrag der Faserstoffbahn 1 an einem oder mehreren Punkten entlang der Papiermaschine 5 online über bekannte Messeinrichtungen, wie Scanner, Sensor, Kamera o.ä. erfasst und an die Steuer- und Regeleinheit 7 übermittelt. Daneben wird die Faserstoffbahn 1 auch auf das Vorhandensein von Fehlstellen oder Einrissen geprüft.

Die Wickelvorrichtung 6 kann, wie in Figur 2 zu erkennen, insbesondere als Tragwalzenroller ausgeführt sein. Zunächst wird die von einer Abwickeleinrichtung 8 abzuwickelnde Faserstoffbahn 1 in einer Längstrennpartie 9 in Teilbahnen getrennt, die dann in einer Aufwickeleinrichtung 10 um Hülsen 11 zu Fertigrollen 3 gewickelt werden.

Zwei der beteiligten Wickelwalzen sind als Tragwalzen 12 und 13 ausgebildet und über elastische Lager 14 gelagert. Diese Tragwalzen 12,13 bilden das Wickelbett.

Kennzeichnend für den Tragwalzenroller-Typ ist eine Aufrolleinrichtung, bei der der gesamte Rollenwurf in dem Wickelbett auf Wickelhülsen 11 aufgewickelt wird. Die Fertigrollen 3 werden gemeinsam, als kompletter Wurf, aufgewickelt. In der Regel geschieht dies mittels einer Umfangswicklung, wozu mindestens eine der beiden Tragwalzen 12, 13 antreibbar ist.

Auf die sich im Wickelbett bildenden Fertigrollen 3 wird eine Linienlast mittels einer Andruckwalze 16 ausgeübt, die im Anfangsstadium jeder Wicklung für ein gewünschtes Maß an Wickelhärte sorgt und im weiteren Verlauf des Wickelprozesses häufig stabilisierende Aufgaben übernimmt.

Die Anpassung an das gewachsene Spektrum der unterschiedlichen Verbraucherwünsche hat zur Folge das heute Fertigrollen 3 in Breitenbereichen zwischen etwa 0,2 m bis 5,0 m und Fertiggewichten zwischen wenigen hundert Kilogramm und 10 Tonnen produziert werden. Ihr Enddurchmesser beträgt meist ca. 1,5 m, wobei auch starke Abweichungen davon gängig sind.

Dabei werden Produktionsgeschwindigkeiten von bis zu 3000 m/min angestrebt, die zwischen Beschleunigungs- und Verzögerungsphasen von 40 m/s² bis 70 m/s² erreicht werden sollen.

Derartig hohe Anforderungen an den Wickelprozess und damit verbunden auch an die Rollenschneidmaschine bergen jedoch ein hohes Gefährdungspotential auf Grund auftretender Schwingungen. Der zu erzeugende Wickel nimmt nämlich kaum eine ideale runde Form an. Kleine Wickelfehler, beispielsweise auf Grund leichter Profilschwankungen der zu wickelnden Papierbahn, addieren sich bei jeder vollen Umwicklung. Auf Grund der periodischen Wiederkehr der jeweiligen Wickelfehler des rotierenden Wickels, bilden sich in Abhängigkeit von dessen Umfang und Umfangsgeschwindigkeit Schwingungen entsprechender Frequenz aus. Mit zunehmender Produktionsgeschwindigkeit wird die Erregerfrequenz immer grösser (bei steigender Umfangsgeschwindigkeit durchläuft dieselbe Position des Wickels immer häufiger denselben Wickelspalt) und die Erregeramplitude wird immer heftiger (gleichzeitig wächst mit zunehmendem Wickelrollendurchmesser auch dessen Unebenheit und das wirksame Gewicht). Dabei nimmt die Wahrscheinlichkeit stark zu, dass sich mit den Tragwalzen 12,13 der Wickelvorrichtung 6 Resonanzen ausbilden.

Daher wird das Schwingungsverhalten der Wickelvorrichtung 6 von Sensoren 15 überwacht und an die Steuer- und Regeleinheit 7 übermittelt.

Daneben erfolgt auch eine Auswertung der Qualität der Fertigrollen 3, wobei als Qualitätsparameter der Fertigrollen 3 insbesondere die Exzentrizität und/oder das Dishing (Maß für Konvexität der Fertigrollen-Stirnflächen) und/oder die Wickelgeschwindigkeit und/oder die Vibrationen des Wickelprozesses der Fertigrollen 3 gelten.

Auf dieser Basis kann die Steuer- und Regeleinheit 7 dann über eine Änderung der Zusammensetzung der Faserstoffsuspension und/oder auf der Basis von Faserstoffbahnparametern das Aufwickeln der Fertigrollen 3 optimieren, d.h. insbesondere die Schwingungen minimieren und/oder die Qualitätsparameter der Fertigrollen 3 verbessern.

Die Steuer- und Regeleinheit 7 kann auf der Basis eines oder mehrerer selbstlernender Modelle ermitteln, wie ein oder mehrere Teilprozesse der Stoffaufbereitung 4 zu steuern sind, um eine gewünschte Veränderung bei der Herstellung der Fertigrollen 3 zu erreichen.

Die Anfangsdaten werden hierzu von Erfahrungswerten und/oder der Datenhistorie der Anlage gebildet und von dem selbstlernenden Modell während der Inbetriebnahme der Anlage optimiert. Hierzu findet insbesondere eine Auswertung der Abweichung zwischen dem von der Steuer- und Regeleinheit 7 beabsichtigten und dem nach der Totzeit dieser Regelung bei der Wickelvorrichtung 6 bzw. den Fertigrollen 3 gemessenen Parameterwert statt.

Zur Beeinflussung des Wickelverhaltens beim Herstellen der Fertigrollen hat es sich als sehr wirksam erwiesen, wenn die Zusammensetzung der Faserstoffsuspension über Art und/oder Menge der dieser zugeführten Additive, insbesondere Stärke verändert wird.

Zwecks Minimierung der Restschwarte sollte der Durchmesser der Mutterrolle 2 in Abhängigkeit vom Durchmesser der herzustellenden Fertigrollen 3 automatisch gesteuert werden.

Außerdem kann der Ausschuss noch dadurch vermindert werden, dass die Qualität der Faserstoffbahn 1 vor der Mutterrolle 2 erfasst und das Längs- und/oder Quer-Schneiden der Faserstoffbahn 1 außerhalb von Qualitätsmängeln, insbesondere Fehlstellen erfolgt.

Eine besonders vorteilhafte Basis für ein selbstlernendes Modell der Steuer- und Regeleinheit 7 ergibt sich, wenn erfindungsgemäß die Zusammensetzung der Faserstoffsuspension und/oder die Parameter der Faserstoffbahn 1 vor der Mutterrolle 2, die Wickelparameter bei der Herstellung der Fertigrollen 3 aus dieser Faserstoffbahn 1 sowie die Qualitätsparameter dieser Fertigrollen 3 erfasst und in einer Datenbank der Steuer- und Regeleinheit 7 jeweils als eine Parameter-Gruppe abgelegt werden und bei ähnlichen Faserstoffbahnparametern für die Vorgabe der Wickelparameter bei der Herstellung der Fertigrollen 3, die Parameter-Gruppe mit den besten Qualitätsparametern der Fertigrollen 3 automatisch ausgewählt wird.

Zu den Wickelparametern bei der Herstellung der Fertigrollen 3 zählen insbesondere die Linienlast der Andruckwalze 16, die Bahngeschwindigkeit sowie der Bahnzug zwischen Mutterrolle 2 und Fertigrollen 3.

Ergänzend oder alternativ ist es ebenso von Vorteil, wenn die Zusammensetzung der Faserstoffsuspension und/oder die Parameter der Faserstoffbahn 1 vor der Mutterrolle 2, die Wickelparameter bei der Herstellung der Fertigrollen 3 aus dieser Faserstoffbahn 1 sowie die Schwingungsparameter (insbesondere Frequenzen und Amplitude) bei der Herstellung dieser Fertigrollen 3 erfasst und in einer Datenbank jeweils als eine Parameter-Gruppe abgelegt werden und bei ähnlichen Faserstoffsuspensionszusammensetzungen und/oder ähnlichen Faserstoffbahnparametern für die Vorgabe der Wickelparameter bei der Herstellung der Fertigrollen 3, die Parameter-Gruppe mit dem besten Schwingungsparametern (Frequenzen und/oder Amplituden) automatisch ausgewählt wird.

Dies erlaubt es bei der Wahl der Wickelparameter kritische Schwingungsfrequenzen und/oder Schwingungsamplituden zu vermeiden und so die Wahrscheinlichkeit für einen Abriss beim Herstellen der Fertigrollen 3 erheblich zu reduzieren.

Werden hierbei Qualitätsparameter der Fertigrollen 3 und die Schwingungsparameter gemeinsam optimiert, so sucht die Steuer- und Regeleinheit 7 die Parameter-Gruppe mit möglichst guten Qualitäts- und Schwingungsparametern. Gegebenenfalls werden dem Bediener mehrere Parameter-Gruppen mit unterschiedlichen Qualitäts- und/oder Schwingungsparametern zur Auswahl vorgegeben.

Darüber hinaus lässt sich über die Einbeziehung der Schwingungsparameter in die Parameter-Gruppe auch die Wahrscheinlichkeit für einen Abriss der Faserstoffbahn ermitteln, welche dem Bediener angezeigt werden kann.

## Patentansprüche

1. Verfahren zur Herstellung einer Mutterrolle (2) einer, aus einer Faserstoffsuspension hergestellten Faserstoffbahn (1) und von Fertigrollen (3) aus durch Längsschneiden einer, von der Mutterrolle (2) laufenden Faserstoffbahn (1) erzeugten Teilbahnen, **dadurch gekennzeichnet, dass** über eine Änderung der Zusammensetzung der Faserstoffsuspension das Aufwickeln der Fertigrollen (3) optimiert wird und/oder Qualitätsparameter der Fertigrollen (3) verbessert werden, und dass die Zusammensetzung der Faserstoffsuspension, die Wickelparameter bei der Herstellung der Fertigrollen (3) aus dieser Faserstoffbahn (1) sowie die Qualitätsparameter dieser Fertigrollen (3) erfasst und in einer Datenbank jeweils als eine Parameter-Gruppe abgelegt werden und bei ähnlichen Faserstoffsuspensionszusammensetzungen für die Vorgabe der Wickelparameter bei der Herstellung der Fertigrollen (3), die Parameter-Gruppe mit den besten Qualitätsparametern der Fertigrollen (3) ausgewählt wird.

2. Verfahren zur Herstellung einer Mutterrolle (2) einer, aus einer Faserstoffsuspension hergestellten Faserstoffbahn (1) und von Fertigrollen (3) aus durch Längsschneiden einer, von der Mutterrolle (2) laufenden Faserstoffbahn (1) erzeugten Teilbahnen, insbesondere nach Anspruch 1, wobei auf der Basis von Faserstoffbahnparametern das Aufwickeln der Fertigrollen (3) optimiert wird und/oder Qualitätsparameter der Fertigrollen (3) verbessert werden, **dadurch gekennzeichnet, dass** die Parameter der Faserstoffbahn (1) vor der Mutterrolle (2), die Wickelparameter bei der Herstellung der Fertigrollen (3) aus dieser Faserstoffbahn (1) sowie die Qualitätsparameter dieser Fertigrollen (3) erfasst und in einer Datenbank jeweils als eine Parameter-Gruppe abgelegt werden und bei ähnlichen Faserstoffbahnparametern für die Vorgabe der Wickelparameter bei der Herstellung der Fertigrollen (3), die Parameter-Gruppe mit den besten Qualitätsparametern der Fertigrollen (3) ausgewählt wird.

3. Verfahren nach Anspruch 2,
**dadurch gekennzeichnet,**
**dass** die Faserstoffbahnparameter die Bahnqualität und/oder die Dicke und/oder die Zugfestigkeit und/oder den Feuchtegehalt und/oder das das Trockengewicht und/oder den Stärkeauftrag und/oder den Farbauftrag der Faserstoffbahn (1) umfassen.

4. Verfahren nach einem der vorhergehenden Ansprüche,
**dadurch gekennzeichnet,**
**dass** die Qualitätsparameter der Fertigrollen (3) die Exzentrizität und/oder das Dishing der Fertigrollen (3) umfassen.

5. Verfahren nach einem der vorhergehenden Ansprüche, **dadurch gekennzeichnet, dass** die Qualität der Faserstoffbahn (1) vor der Mutterrolle (2) erfasst und das Längsund/oder Quer-Schneiden der Faserstoffbahn (1) außerhalb von Qualitätsmängeln, insbesondere Fehlstellen erfolgt.

6. Verfahren nach einem der vorhergehenden Ansprüche, **dadurch gekennzeichnet, dass** der Durchmesser der Mutterrolle (2) in Abhängigkeit vom Durchmesser der herzustellenden Fertigrollen (3) gesteuert wird.

7. Verfahren nach einem der vorhergehenden Ansprüche, **dadurch gekennzeichnet, dass** die Zusammensetzung der Faserstoffsuspension über Art und/oder Menge der dieser zugeführten Additive, insbesondere Stärke verändert wird.

8. Verfahren nach einem der vorhergehenden Ansprüche, **dadurch gekennzeichnet, dass** die Zusammensetzung der Faserstoffsuspension und/oder die Parameter der Faserstoffbahn (1) vor der Mutterrolle (2), die Wickelparameter bei der Herstellung der Fertigrollen (3) aus dieser Faserstoffbahn (1) sowie die Schwingungsparameter bei der Herstellung dieser Fertigrollen (3) erfasst und in einer Datenbank jeweils als eine Parameter-Gruppe abgelegt werden und bei ähnlichen Faserstoffsuspensionszusammensetzungen und/oder ähnlichen Faserstoffbahnparametern für die Vorgabe der Wickelparameter bei der Herstellung der Fertigrollen (3), die Parameter-Gruppe mit dem besten Schwingungsparametern ausgewählt wird.

## Claims

1. Method for producing a parent roll (2) of a fibrous web (1) manufactured from a fibre suspension and finished rolls (3) from partial webs produced by longitudinal cutting of a fibrous web (1) running from the parent roll (2), **characterised in that** the winding of the finished rolls (3) is optimised and/or the quality parameters of the finished rolls (3) are improved by altering the composition of the fibre suspension, and that the composition of the fibre suspension, the winding parameters during the production of the finished rolls (3) from this fibrous web (1) as well as the quality parameters of these finished rolls (3) are recorded and stored in a database as a respective parameter group, and for similar fibre suspension compositions, when specifying the winding parameters for the production of the finished rolls (3), the parameter group with the best quality parameters of the finished rolls (3) is selected.

2. Method for producing a parent roll (2) of a fibrous web (1) manufactured from a fibre suspension and finished rolls (3) from partial webs produced by longitudinal cutting of a fibrous web (1) running from the parent roll (2), in particular according to claim 1, wherein, on the basis of fibre web parameters, the winding of the finished rolls (3) is optimised and/or the quality parameters of the finished rolls (3) are improved, **characterised in that** the parameters of the fibrous web (1) upstream of the parent roll (2), the winding parameters during the production of the finished rolls (3) from this fibrous web (1), as well as the quality parameters of these finished rolls (3), are recorded and stored in a database as a respective parameter group, and, in the case of similar fibrous web parameters, for the specification of the winding parameters during the production of the finished rolls (3), the parameter group with the best quality parameters of the finished rolls (3) is selected.

3. Method according to claim 2,
**characterised in**
**that** the fibrous web parameters comprise the web quality and/or the thickness and/or the tensile strength and/or the moisture content and/or the dry weight and/or the starch application and/or the colour application of the fibrous web (1).

4. Method according to one of the preceding claims,
**characterised in**
**that** the quality parameters of the finished rolls (3) comprise the eccentricity and/or the dishing of the finished rolls (3).

5. Method according to one of the preceding claims, **characterised in that** the quality of the fibrous web (1) is detected upstream of the parent roll (2) and the longitudinal and/or transverse cutting of the fibrous web (1) takes place outside of quality defects, in particular fault locations.

6. Method according to one of the preceding claims, **characterised in that** the diameter of the parent roll (2) is controlled as a function of the diameter of the finished rolls (3) to be produced.

7. Method according to one of the preceding claims, **characterised in that** the composition of the fibre suspension is altered by the type and/or quantity of additives, in particular starch, added thereto.

8. Method according to one of the preceding claims, **characterised in that** the composition of the fibre suspension and/or the parameters of the fibrous web (1) upstream of the parent roll (2), the winding parameters during the production of the finished rolls (3) from this fibrous web (1), as well as the vibration parameters during the production of these finished rolls (3), are recorded and stored in a database as a respective parameter group, and, in the case of similar fibre suspension compositions and/or similar fibrous web parameters, the parameter group with the best vibration parameters is selected for specifying the winding parameters during the production of the finished rolls (3).

## Revendications

1. Procédé de fabrication d'un rouleau mère (2) d'une bande de matière fibreuse (1) produite à partir d'une suspension de matière fibreuse, et de rouleaux finis (3) à partir de bandes partielles générées par découpe longitudinale d'une bande de matière fibreuse (1) défilant depuis le rouleau mère (2), **caractérisé en ce que** l'enroulement des rouleaux finis (3) est optimisé et/ou les paramètres de qualité des rouleaux finis (3) sont améliorés par une modification de la composition de la suspension de matière fibreuse, et **en ce que** la composition de la suspension de matière fibreuse, les paramètres d'enroulement lors de la fabrication des rouleaux finis (3) à partir de cette bande de matière fibreuse (1) ainsi que les paramètres de qualité de ces rouleaux finis (3) sont enregistrés et stockés dans une base de données sous la forme d'un groupe de paramètres, et que, pour des compositions similaires de suspension de matière fibreuse, lors de la définition des paramètres d'enroulement pour la fabrication des rouleaux finis (3), le groupe de paramètres présentant les meilleurs paramètres de qualité des rouleaux finis (3) est sélectionné.

2. Procédé de fabrication d'un rouleau mère (2) d'une bande de matière fibreuse (1) fabriquée à partir d'une suspension de matière fibreuse et de rouleaux finis (3) à partir de bandes partielles produites par découpe longitudinale d'une bande de matière fibreuse (1) défilant depuis le rouleau mère (2), en particulier selon la revendication 1, dans lequel, sur la base des paramètres de la bande de matière fibreuse, l'enroulement des rouleaux finis (3) est optimisé et/ou les paramètres de qualité des rouleaux finis (3) sont améliorés, **caractérisé en ce que** les paramètres de la bande de matière fibreuse (1) en amont du rouleau mère (2), les paramètres d'enroulement lors de la fabrication des rouleaux finis (3) à partir de cette bande de matière fibreuse (1) ainsi que les paramètres de qualité de ces rouleaux finis (3) sont enregistrés et stockés dans une base de données sous la forme d'un groupe de paramètres, et en cas de paramètres de bande de matière fibreuse similaires pour la définition des paramètres d'enroulement lors de la fabrication des rouleaux finis (3), le groupe de paramètres présentant les meilleurs paramètres de qualité des rouleaux finis (3) est sélectionné.

3. Procédé selon la revendication 2,
**caractérisé en ce**
**que** les paramètres de la bande de matière fibreuse comprennent la qualité de la bande et/ou l'épaisseur et/ou la résistance à la traction et/ou la teneur en humidité et/ou le poids sec et/ou l'application d'amidon et/ou l'application de couleur de la bande de matière fibreuse (1).

4. Procédé selon l'une des revendications précédentes,
**caractérisé en ce**
**que** les paramètres de qualité des rouleaux finis (3) comprennent l'excentricité et/ou le bombement des rouleaux finis (3).

5. Procédé selon l'une des revendications précédentes, **caractérisé en ce que** la qualité de la bande de matière fibreuse (1) est détectée en amont du rouleau mère (2) et que la découpe longitudinale et/ou transversale de la bande de matière fibreuse (1) s'effectue en dehors des défauts de qualité, en particulier des lacunes.

6. Procédé selon l'une des revendications précédentes, **caractérisé en ce que** le diamètre du rouleau mère (2) est commandé en fonction du diamètre des rouleaux finis (3) à fabriquer.

7. Procédé selon l'une des revendications précédentes, **caractérisé en ce que** la composition de la suspension de matière fibreuse est modifiée par le type et/ou la quantité des additifs qui y sont ajoutés, en particulier l'amidon.

8. Procédé selon l'une des revendications précédentes, **caractérisé en ce que** la composition de la suspension de matière fibreuse et/ou les paramètres de la bande de matière fibreuse (1) en amont du rouleau mère (2), les paramètres d'enroulement lors de la fabrication des rouleaux finis (3) à partir de cette bande de matière fibreuse (1) ainsi que les paramètres de vibration lors de la fabrication de ces rouleaux finis (3) sont enregistrés et stockés dans une base de données sous la forme d'un groupe de paramètres, et, pour des compositions de suspension de matière fibreuse similaires et/ou des paramètres de bande de matière fibreuse similaires, le groupe de paramètres présentant les meilleurs paramètres de vibration est sélectionné pour la définition des paramètres d'enroulement lors de la fabrication des rouleaux finis (3).
